# EUROPEAN PATENT APPLICATION

(11) **EP 3 778 505 A1**
(43) Date of publication of application: **17.02.2021**
(21) Application number: 20191005.6
(22) Date of filing: 13.08.2020
(51) Int. Cl.: C03B 37/014

(54) **METHOD FOR SINTERING OF AN OPTICAL FIBRE PREFORM**

(30) Priority: 13.08.2019 IN 201921032705
(71) Applicant: Sterlite Technologies Limited, 431 136 Maharashtra (IN)
(72) Inventor: AGARWAL, Shubhanshu, Aurangabad (IN); D, Chitra, 431136 Aurangabad (IN); HARODE, Hima, 431136 Aurangabad (IN); BALAKRISHNAN, Janarthanan, 431136 Aurangabad (IN)
(74) Representative: Hepworth Browne

(57) **Abstract**

The present disclosure provides a method for sintering of an optical fiber preform (106). The method includes preheating of the optical fiber preform (106) in a sintering chamber (104). In addition, the method includes first downfeeding of the optical fiber preform
(106) into a sintering furnace (110) in the presence of helium gas and chlorine gas. The first downfeeding of the optical fiber preform (106) facilitates sintering of an outer layer of the optical fiber preform (106). Further, the method includes pulling out the optical fiber preform from the sintering furnace in presence of chlorine gas and at least one of nitrogen gas and helium gas. Further, the method includes second down feeding of the optical fiber preform (106) in the sintering furnace (104) in the presence of nitrogen gas and chlorine gas. The second downfeeding of the optical fiber preform (106) facilitates sintering of the optical fiber preform (106).

## Description

### Field of the Invention.

The present disclosure relates to a field of optical fiber. More particularly, the present disclosure relates to a method for sintering of an optical fiber preform.

### Description of the related art.

With the advancement of science and technology, various modern technologies are being employed for communication purposes. One of the most important modern communication technologies is optical fiber. In general, optical fiber is a flexible, transparent fiber made by drawing glass (silica) or plastic to a diameter slightly thicker than that of a human hair. Initially, the optical fiber is made by manufacturing a large-diameter "preform" and sintering the manufactured preform. The sintering of the preform produces a dense and non-porous preform. Conventionally, sintering of the preform is performed using high consumption of helium. However, high consumption of helium increases over all cost of the manufacturing process as helium is costlier than other inert gases like argon and nitrogen.

In light of the above stated discussion, there is a need of an advanced method for sintering of an optical fiber preform that overcomes the above stated drawbacks.

### SUMMARY OF THE INVENTION

The present disclosure discusses a method for sintering of an optical fiber preform. The method includes a first step of preheating of the optical fiber preform. In addition, the method includes a second step of performing first downfeeding of the optical fiber preform into a sintering furnace in the presence of helium gas and chlorine gas. Further, the method includes a third step of pulling out the optical fiber preform from the sintering furnace in presence of chlorine gas and at least one of nitrogen gas and helium gas. Furthermore, the method includes a fourth step of performing second downfeeding of the optical fiber preform into the sintering furnace in the presence of nitrogen gas and chlorine gas. Moreover, the method includes a fifth step of drawing of the optical fiber preform from the sintering furnace. Also, preheating of the optical fiber preform is done in a sintering chamber. Also, preheating of the optical fiber preform enables diffusion of helium gas inside the optical fiber preform. The sintering chamber is filled with helium gas and chlorine gas. Also, the first downfeeding of the optical fiber preform into the sintering furnace in the presence of helium gas and chlorine gas facilitates sintering of an outer layer of the optical fiber preform. Also, nitrogen gas and chlorine gas maintains an inert atmosphere to reduce OH content in the optical fiber preform. The second downfeeding of the optical fiber preform in the sintering furnace in the presence of nitrogen gas and chlorine gas facilitates the sintering of the optical fiber preform.

In an aspect, the present disclosure provides a method for sintering of an optical fiber preform. The method includes a first step of preheating of the optical fiber preform. In addition, the method includes a second step of performing first downfeeding of the optical fiber preform into a sintering furnace in the presence of helium gas and chlorine gas. Further, the method includes a third step of pulling out the optical fiber preform from the sintering furnace in presence of chlorine gas and at least one of nitrogen gas and helium gas. Furthermore, the method includes a fourth step of performing second downfeeding of the optical fiber preform into the sintering furnace in the presence of nitrogen gas and chlorine gas. Moreover, the method includes a fifth step of drawing of the optical fiber preform from the sintering furnace. Also, preheating of the optical fiber preform is done in a sintering chamber. Also, preheating of the optical fiber preform enables diffusion of helium gas inside the optical fiber preform. The sintering chamber is filled with helium gas and chlorine gas. Also, the first downfeeding of the optical fiber preform into the sintering furnace in the presence of helium gas and chlorine gas facilitates sintering of an outer layer of the optical fiber preform. Also, nitrogen gas and chlorine gas maintains an inert atmosphere to reduce OH content in the optical fiber preform. The second downfeeding of the optical fiber preform in the sintering furnace in presence of nitrogen gas and chlorine gas facilitates the sintering of the optical fiber preform.

In an embodiment of the present disclosure, preheating of the optical fiber preform in presence of helium gas and chlorine gas enables reduction of OH content in the optical fiber preform.

In an embodiment of the present disclosure, the sintering of the outer layer of the optical fiber preform in presence of helium gas and chlorine gas improves heat transfer attributes of the optical fiber preform.

In an embodiment of the present disclosure, the first downfeeding of the optical fiber preform into the sintering furnace is performed at a speed in the range of about 3 millimeter per minute to 7 millimeter per minute.

In an embodiment of the present disclosure, the sintering furnace receives helium gas at a flow rate in the range of about 25 standard liters per minute to 35 standard litre per minute. The sintering furnace receives helium gas during the first downfeeding of the optical fiber preform.

In an embodiment of the present disclosure, the sintering furnace receives chlorine gas at a flow rate in the range of about 3 standard liters per minute to 6 standard litre per minute. The sintering furnace receives chlorine gas during the first downfeeding of the optical fiber preform.

In an embodiment of the present disclosure, the second downfeeding of the optical fiber preform into the sintering furnace is performed in presence of nitrogen gas and chlorine gas at speed in the range of about 10 millimeter per minute to 30 millimeter per minute.

In an embodiment of the present disclosure, the sintering furnace has temperature in range of about 1400° Celsius to 1550° Celsius.

In an embodiment of the present disclosure, the sintering furnace has temperature in range of about 1400° Celsius to 1550° Celsius.

A primary object of the present disclosure is to provide a method for sintering of an optical fiber preform by using low helium quantity.

Another object of the present disclosure is to provide the method for sintering of the optical fiber preform with reduced cost in the long run.

Yet another object of the present disclosure is to provide a method for sintering of the optical fiber preform with increase in ease of operation.

### BRIEF DESCRIPTION OF DRAWING

Having thus described the invention in general terms, reference now be made to the accompanying drawings, which are not necessarily drawn to scale, and wherein:
FIG. 1 illustrates a general overview of a system for sintering of an optical fiber preform, in accordance with various embodiments of the present disclosure; and
FIG. 2 illustrates a flowchart for a method for sintering of the optical fiber preform, in accordance with an embodiment of the present disclosure.

It should be noted that the accompanying figures are intended to present illustrations of exemplary embodiments of the present disclosure. These figures are not intended to limit the scope of the present disclosure. It should also be noted that accompanying figures are not necessarily drawn to scale.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced items.

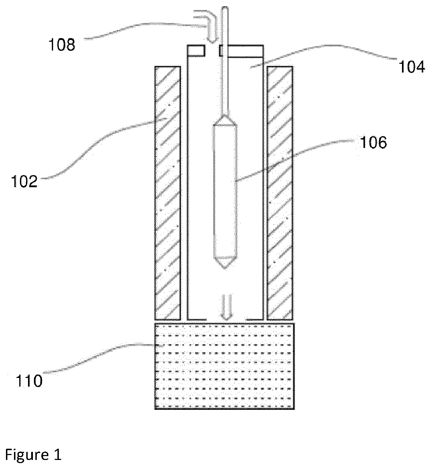

FIG. 1 illustrates a general overview of a system 100 for performing sintering of an optical fiber preform 106, in accordance with various embodiments of the present disclosure. FIG. 1 shows an arrangement of various components of the system 100. The system 100 enables a continuous process to sinter the optical fiber preform 106 completely. The various components of the system 100 collectively enables sintering of the optical fiber preform 106. In general, optical fiber preform is a large cylindrical body of glass having a core structure and a cladding structure. In addition, optical fiber preform is a material used for fabrication of optical fibers.

The system 100 includes an insulation layer 102, a sintering chamber 104, the optical fiber preform 106, an inlet 108 and a sintering furnace 110.

The system 100 includes the insulation layer 102. In an embodiment of the present disclosure, the insulation layer 102 is used to insulate the sintering chamber 104. In general, insulation layer maintains a particular temperature in a sintering chamber. In an embodiment of the present disclosure, helium gas and chlorine gas is passed into the sintering chamber 104 through the inlet 108. In an embodiment of the present disclosure, helium gas and chlorine gas are used to reduce OH content from the sintering chamber 104.

Further, the optical fiber preform 106 undergoes first downfeeding into the sintering furnace 110. In an embodiment of the present disclosure, the first downfeeding of the optical fiber preform 106 into the sintering furnace 110 is performed in presence of helium gas and chlorine gas. The sintering furnace 110 receives helium gas and chlorine gas from the sintering chamber 104 during the first downfeeding of the optical fiber preform. The down feeding of the optical fiber preform 106 into the sintering furnace 110 in presence of helium and chlorine gas facilitates sintering of an outer layer of the optical fiber preform 106. In an embodiment of the present disclosure, the sintering furnace 110 receives helium gas at a flow rate in the range of about 25 standard litre per minute to 35 standard litre per minute during preheating of the optical fiber preform 106. In another embodiment of the present disclosure, range of flow rate of helium gas in the sintering furnace 110 may vary. In an embodiment of the present disclosure, the sintering furnace 110 receives chlorine gas at a flow rate of in range of about 3 standard litre per minute to 6 standard litre per minute during the first downfeeding of the optical fiber preform 106. In another embodiment of the present disclosure, range of flow rate of chlorine gas in the sintering furnace 110 may vary.

In an embodiment of the present disclosure, the first downfeeding of the optical fiber preform 106 into the sintering furnace 110 is performed at speed in the range of about 3 millimeter per minute to 7 millimeter per minute. In another embodiment of the present disclosure, range of speed of the first downfeeding of the optical fiber preform 106 into the sintering furnace 110 may vary. In an embodiment of the present disclosure, the sintering furnace 110 has temperature in range of about 1400° Celsius to 1550° Celsius. In another embodiment of the present disclosure, range of temperature of the sintering furnace 110 may vary. In another embodiment of the present disclosure, sintering of the optical fiber preform 106 is performed at suitable pressure. In an embodiment of the present disclosure, sintering of the outer layer of the optical fiber preform 106 in presence of helium gas and chlorine gas improves heat transfer attributes of the optical fiber preform 106.

Furthermore, the optical fiber preform 106 is pulled up in the sintering chamber 104 from the sintering furnace 110. In other words, the optical fiber preform is pulled out of the sintering furnace 110. Moreover, the optical fiber preform 106 is pulled out of the sintering furnace 110 in presence of chlorine gas and at least one of nitrogen gas or helium gas.

Also, the optical fiber preform 106 undergoes second downfeeding into the sintering furnace 110. The second downfeeding of the optical fiber preform 106 into the sintering furnace 110 is performed in presence of nitrogen gas and chlorine gas. In addition, nitrogen gas replaces helium gas. Also, nitrogen gas replaces helium gas to prevent accumulation of impurities near the sintering furnace 110. Further, nitrogen gas and chlorine gas maintains an inert atmosphere in the sintering furnace 110 to reduce OH content from the optical fiber preform 106.

In an embodiment of the present disclosure, the second downfeeding of the optical fiber preform 106 into the sintering furnace 110 is performed at a speed in the range of about 10 millimeter per minute to 30 millimeter per minute. In another embodiment of the present disclosure, range of speed of the second downfeeding of the optical fiber preform 106 into the sintering furnace 110 may vary. The second down feeding of the optical fiber preform 106 facilitates sintering of the optical fiber preform 106 completely. In an embodiment of the present disclosure, the optical fiber preform 106 remains in hold position for a while in the sintering furnace 110. Further, the optical fiber preform 106 is drawn out from the sintering furnace 110.

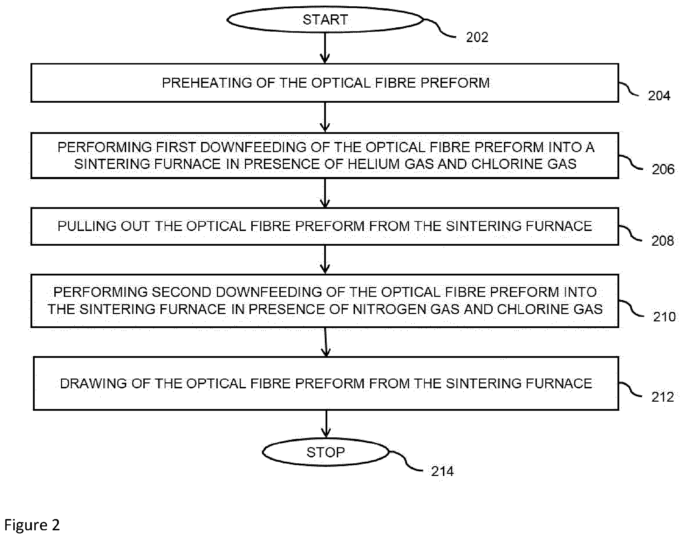

FIG. 2 illustrates a flowchart 200 for a method for sintering of the optical fiber preform 106, in accordance with an embodiment of the present disclosure. The method for sintering of the optical fiber preform 106 facilitates pore removal from the optical fiber preform 106. In addition, the method for sintering of the optical fiber preform 106 enables reduction of helium gas consumption. It may be noted that to explain the process steps of flowchart 200, references will be made to the system elements of FIG. 1. It may also be noted that the flowchart 200 may have lesser or more number of steps.

The flowchart initiates at step 202. Following step 202, at step 204, the method performs preheating of the optical fiber preform 106 in presence of helium gas and chlorine gas. Further, helium gas is diffused inside the optical fiber preform 106. At step 206, the method performs the first downfeeding of the optical fiber preform 106 into the sintering furnace 110 in presence of helium gas and chlorine gas at a speed of about 3 millimeter per minute to 7 millimeter per minute. The first downfeeding of the optical fiber preform 106 into the sintering furnace 110 in presence of helium gas and chlorine gas facilitates sintering of an outer layer of the optical fiber preform 106.

At step 208, the method performs up feeding or pulling up of the optical fiber preform 106 in the sintering chamber 104 from the sintering furnace 110 in the presence of chlorine gas and at least one of nitrogen gas or helium gas. In addition, at step 210, the method performs the second downfeeding of the optical fiber preform 106 into the sintering furnace 110. The second downfeeding of the optical fiber preform 106 into the sintering furnace 110 is performed in presence of nitrogen gas and chlorine gas. In addition, nitrogen gas replaces helium gas. Further, nitrogen gas replaces helium gas to prevent accumulation of impurities near the sintering furnace 110. The downfeeding of the optical fiber preform 106 in presence of nitrogen gas and chlorine gas facilitates sintering of the optical fiber preform 106 completely. Furthermore, at step 212, the method performs drawing of the optical fiber preform 106 from the sintering furnace 110. The flow chart terminates at step 214.

The present disclosure provides numerous advantages over the prior art. The present disclosure provides an improved method for sintering of an optical fiber preform. The method provides significant reduction in helium usage. In addition, the method provides an increase in ease of operation. Further, the method provides more uniform diameter of the optical fiber preform along the length. Furthermore, the method provides reduced cost in the long run.

The foregoing descriptions of pre-defined embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

The invention is further defined by the following numbered clauses.
1. A method for sintering of an optical fiber perform (106), the method comprising:
   preheating of the optical fiber preform (106), wherein preheating of the optical fiber preform (106) is done in a sintering chamber (104);
   performing first downfeeding of the optical fiber preform (106) into a sintering furnace (110); and,
   performing second downfeeding of the optical fiber preform (106) into the sintering furnace (110).
2. The method of clause 1, wherein the first downfeeding and the second downfeeding of the optical fiber preform (106) into a sintering furnace (110) is done in presence of helium gas and chlorine gas.
3. The method of clause 1, wherein preheating of the optical fiber preform (106) enables diffusion of helium gas inside the optical fiber preform (106).
4. The method of clause 1, wherein the sintering chamber (104) is filled with helium gas and chlorine gas.
5. The method of clause 1, wherein the first downfeeding of the optical fiber preform (106) into the sintering furnace (110) comprises sintering of an outer layer of the optical fiber preform (106).
6. The method of clause 1 further comprising pulling out the optical fiber preform (106) from the sintering furnace (110), prior to performing second downfeeding.
7. The method of clause 1 further comprising pulling out the optical fiber preform (106) from the sintering furnace (110) in presence of chlorine gas and atleast one of nitrogen gas and helium gas, prior to performing second downfeeding.
8. The method of clause 1, wherein preheating of the optical fiber preform (106) in presence of helium gas and chlorine gas reduces OH content in the optical fiber preform (106).
9. The method of clause 1, wherein the first downfeeding of the optical fiber preform (106) into the sintering furnace (110) is performed at a speed in the range of about 3 millimeter per minute to 7 millimeter per minute.
10. The method of clause 1, wherein the sintering furnace (110) has temperature in range of about 1400° Celsius to 1550° Celsius.
11. A method for sintering of an optical fiber perform (106), the method comprising:
   preheating of the optical fiber preform (106), wherein preheating of the optical fiber preform (106) is done in a sintering chamber (104), wherein preheating of the optical fiber preform (106) enables diffusion of helium gas inside the optical fiber preform (106), wherein the sintering chamber (104) is filled with helium gas and chlorine gas;
   performing first downfeeding of the optical fiber preform (106) into a sintering furnace (110) in the presence of helium gas and chlorine gas, wherein the first downfeeding of the optical fiber preform (106) into the sintering furnace (110) in the presence of helium gas and chlorine gas facilitates sintering of an outer layer of the optical fiber preform (106);
   pulling out the optical fiber preform (106) from the sintering furnace (110) in presence of chlorine gas and at least one of nitrogen gas and helium gas;
   performing second downfeeding of the optical fiber preform (106) into the sintering furnace (110) in presence of nitrogen gas and chlorine gas, wherein nitrogen gas and chlorine gas maintains an inert atmosphere to reduce OH content in the optical fiber preform (106), wherein the second downfeeding of the optical fiber preform (106) in the sintering furnace (110) in presence of nitrogen gas and chlorine gas facilitates sintering of the optical fiber preform (106); and,
   drawing of the optical fiber preform (106) from the sintering furnace (110).
12. The method of clause 11, wherein preheating of the optical fiber preform (106) in presence of helium gas and chlorine gas enables reduction of OH content in the optical fiber preform (106).
13. The method of clause 11, wherein sintering of the outer layer of the optical fiber preform (106) in presence of helium gas and chlorine gas improves heat transfer attributes of the optical fiber preform (106).
14. The method of clause 11, wherein the first downfeeding of the optical fiber preform (106) into the sintering furnace (110) is performed at a speed in the range of about 3 millimeter per minute to 7 millimeter per minute.
15. The method of clause 11, wherein the sintering furnace (110) receives helium gas at a flow rate in the range of about 25 standard litre per minute to 35 standard litres per minute, wherein the sintering furnace (110) receives helium gas during the first downfeeding of the optical fiber preform (106).
16. The method of clause 11, wherein the sintering furnace (110) receives chlorine gas at a flow rate in the range of about 3 standard liters per minute to 6 standard litres per minute, wherein the sintering furnace (110) receives chlorine gas during the first downfeeding of the optical fiber preform (106).
17. The method of clause 11, wherein the second downfeeding of the optical fiber preform (106) into the sintering furnace (110) is performed in the presence of nitrogen gas and chlorine gas at speed in range of about 10 millimeter per minute to 30 millimeter per minute.
18. The method of clause 11, wherein the sintering furnace (110) has temperature in range of about 1400° Celsius to 1550° Celsius.

## Claims

1. A method for sintering of an optical fiber preform (106), the method comprising:
preheating of the optical fiber preform (106), wherein preheating of the optical fiber preform (106) is done in a sintering chamber (104);
performing first downfeeding of the optical fiber preform (106) into a sintering furnace (110); and,
performing second downfeeding of the optical fiber preform (106) into the sintering furnace (110).

2. The method as claimed in claim 1, wherein the first downfeeding and the second downfeeding of the optical fiber preform (106) into a sintering furnace (110) is done in presence of helium gas and chlorine gas.

3. The method as claimed in claim 1 or claim 2, wherein preheating of the optical fiber preform (106) enables diffusion of helium gas inside the optical fiber preform (106).

4. The method as claimed in any preceding claim, wherein the sintering chamber (104) is filled with helium gas and chlorine gas.

5. The method as claimed in any preceding claim, wherein the first downfeeding of the optical fiber preform (106) into the sintering furnace (110) comprises sintering of an outer layer of the optical fiber preform (106).

6. The method as claimed in any preceding claim further comprising (A) or (B):
(A) pulling out the optical fiber preform (106) from the sintering furnace (110), prior to performing second downfeeding; and
(B) pulling out the optical fiber preform (106) from the sintering furnace (110) in presence of chlorine gas and at least one of nitrogen gas and helium gas, prior to performing second downfeeding.

7. The method as claimed in any preceding claim, wherein preheating of the optical fiber preform (106) in presence of helium gas and chlorine gas reduces OH content in the optical fiber preform (106).

8. The method as claimed in any preceding claim, wherein the first downfeeding of the optical fiber preform (106) into the sintering furnace (110) is performed at a speed in the range of about 3 millimeter per minute to 7 millimeter per minute.

9. A method for sintering of an optical fiber perform (106), the method comprising:
preheating of the optical fiber preform (106), wherein preheating of the optical fiber preform (106) is done in a sintering chamber (104), wherein preheating of the optical fiber preform (106) enables diffusion of helium gas inside the optical fiber preform (106), wherein the sintering chamber (104) is filled with helium gas and chlorine gas;
performing first downfeeding of the optical fiber preform (106) into a sintering furnace (110) in the presence of helium gas and chlorine gas, wherein the first downfeeding of the optical fiber preform (106) into the sintering furnace (110) in the presence of helium gas and chlorine gas facilitates sintering of an outer layer of the optical fiber preform (106);
pulling out the optical fiber preform (106) from the sintering furnace (110) in presence of chlorine gas and at least one of nitrogen gas and helium gas;
performing second downfeeding of the optical fiber preform (106) into the sintering furnace (110) in presence of nitrogen gas and chlorine gas, wherein nitrogen gas and chlorine gas maintains an inert atmosphere to reduce OH content in the optical fiber preform (106), wherein the second downfeeding of the optical fiber preform (106) in the sintering furnace (110) in presence of nitrogen gas and chlorine gas facilitates sintering of the optical fiber preform (106); and,
drawing of the optical fiber preform (106) from the sintering furnace (110).

10. The method as claimed in claim 9, wherein preheating of the optical fiber preform (106) in presence of helium gas and chlorine gas enables reduction of OH content in the optical fiber preform (106).

11. The method as claimed in claim 9 or claim 10, wherein sintering of the outer layer of the optical fiber preform (106) in presence of helium gas and chlorine gas improves heat transfer attributes of the optical fiber preform (106).

12. The method as claimed in any one of claims 9 to 11, wherein the first downfeeding of the optical fiber preform (106) into the sintering furnace (110) is performed at a speed in the range of about 3 millimeter per minute to 7 millimeter per minute.

13. The method as claimed in any one of claims 9 to 12, wherein the sintering furnace (110) receives helium gas at a flow rate in the range of about 25 standard litre per minute to 35 standard litres per minute, wherein the sintering furnace (110) receives helium gas during the first downfeeding of the optical fiber preform (106).

14. The method as claimed in any one of claims 9 to 13, wherein the sintering furnace (110) receives chlorine gas at a flow rate in the range of about 3 standard liters per minute to 6 standard litres per minute, wherein the sintering furnace (110) receives chlorine gas during the first downfeeding of the optical fiber preform (106).

15. The method as claimed in any one of claims 9 to 14, wherein the second downfeeding of the optical fiber preform (106) into the sintering furnace (110) is performed in the presence of nitrogen gas and chlorine gas at speed in range of about 10 millimeter per minute to 30 millimeter per minute.
